# EUROPEAN PATENT APPLICATION

(11) **EP 4 808 057 A1**
(43) Date of publication of application: **16.09.2026**
(21) Application number: 23958243.0
(22) Date of filing: 07.11.2023
(51) Int. Cl.: H04L 27/26

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); HARADA, Hiroki, Tokyo 100-6150 (JP); NAGATA, Satoshi, Tokyo 100-6150 (JP); LIU, Liu, Beijing 100190 (CN); XU, Jialong, Beijing 100190 (CN)
(74) Representative: Hoffmann Eitle
(86) International application number: PCT/JP2023/040131
(87) International publication number: WO 2025/099839

(57) **Abstract**

A terminal according to one aspect of the present disclosure includes: a control section that does not simultaneously activate a plurality of waveform-transformation-related functionalities or models; and a transmitting section that transmits an uplink signal by applying waveform transformation processing associated with activated one of the functionalities or the models. According to one aspect of the present disclosure, waveform transformation based on artificial intelligence (AI) techniques can be suitably performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

A transmit signal for radio communication is generally amplified through a power amplifier (PA) in a transmitter. However, when the input power is high, it is known that the PA causes nonlinear distortion, interference, and the like.

For future radio communication technology, the use of Artificial Intelligence (AI) technology such as Machine Learning (ML) for control, management, and the like of a network/device is being considered. For example, for future radio communication technologies (e.g., 3GPP Rel. 19, 20, 21), the use of AI techniques to compensate for the above-mentioned nonlinear distortion is being considered.

However, such as with the above-mentioned compensation for nonlinear distortion, how to perform related configuration/control/communication for AI techniques that transform a signal waveform for communication has not yet been investigated. If these are not clearly defined, suitable waveform transformation cannot be performed, and there is a possibility that improvement in communication throughput/communication quality may be suppressed.

Therefore, one of the objects of the present disclosure is to provide a terminal, a radio communication method, and a base station, each of which can suitably perform waveform transformation based on AI techniques.

### Solution to Problem

A terminal according to one aspect of the present disclosure includes: a control section that does not simultaneously activate a plurality of waveform-transformation-related functionalities or models; and a transmitting section that transmits an uplink signal by applying waveform transformation processing associated with activated one of the functionalities or the models.

### Advantageous Effects of Invention

According to one aspect of the present disclosure, waveform transformation based on AI techniques can be suitably performed.

### Brief Description of Drawings

[FIG. 1] FIG. 1 is a diagram showing an example of input/output characteristics of a power amplifier (PA).
[FIG. 2] FIG. 2 is a diagram showing an example of nonlinear distortion caused by nonlinear characteristics of the PA.
[FIG. 3] FIG. 3 is a diagram showing an example of compensation for nonlinear distortion caused by nonlinear characteristics of the PA.
[FIG. 4] FIG. 4 is a diagram showing an example of rotation or scaling of complex-valued modulation symbols/complex-valued symbols in a first embodiment.
[FIG. 5] FIG. 5 is a diagram showing an example of a selective mapping.
[FIG. 6] FIG. 6 is a diagram showing an example of a selective mapping in a second embodiment.
[FIG. 7] FIGS. 7A and 7B are diagrams showing an example of a change in a subcarrier mapping associated with a selective mapping in the second embodiment.
[FIG. 8] FIGS. 8A to 8D are diagrams showing examples of Cases 1 to 5 in a third embodiment.
[FIG. 9] FIG. 9 is a diagram showing an example of a definition of a time-continuous signal in an existing 3GPP NR specification.
[FIG. 10] FIGS. 10A and 10B are diagrams showing an example of clipping in the third embodiment.
[Fig. 11] FIGS. 11A to 11C are diagrams showing an example of Tone Reservation (TR).
[FIG. 12] FIGS. 12A and 12B are diagrams showing an example of a flow of application of a functionality/model in a seventh embodiment.
[FIG. 13] FIG. 13 is a diagram showing an example of a schematic structure of a radio communication system according to one embodiment.
[FIG. 14] FIG. 14 is a diagram showing an example of a structure of a base station according to one embodiment.
[FIG. 15] FIG. 15 is a diagram showing an example of a structure of a user terminal according to one embodiment.
[FIG. 16] FIG. 16 is a diagram showing an example of the hardware configuration of a base station and user terminal in one embodiment.
[FIG. 17] FIG. 17 is a diagram showing an example of a vehicle according to one embodiment.

### Description of Embodiments

### (Nonlinear Problem of Power Amplifier (PA))

A transmit signal for radio communication is generally amplified through a power amplifier (PA) in a transmitter. However, when the input power is high, it is known that the PA causes nonlinear distortion, interference, and the like.

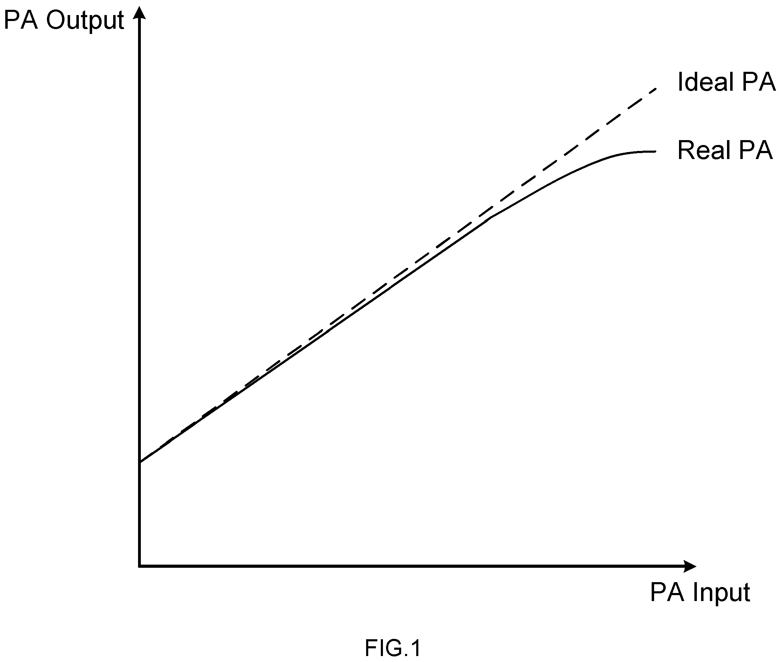

FIG. 1 is a diagram showing an example of input/output characteristics of a PA. In an ideal PA, an output voltage is linearly amplified with respect to an input voltage. Although a real PA has almost linear characteristics if an input voltage is less than or equal to a given value, it has nonlinear characteristics if the input voltage exceeds the given value, and the amplification of an output voltage with respect to the input voltage saturates.

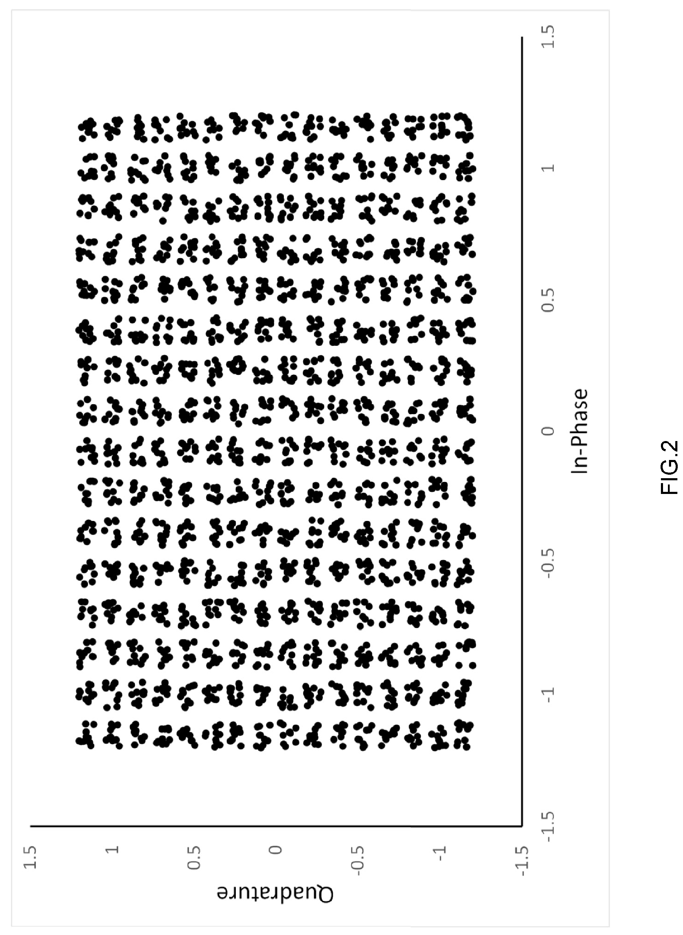

FIG. 2 is a diagram showing an example of nonlinear distortion caused by nonlinear characteristics of the PA. This figure is also referred to as a signal space diagram (constellation diagram), in which a horizontal axis corresponds to in-phase and a vertical axis corresponds to quadrature. In this example, an example of nonlinear distortion to which modulation symbols based on 256 Quadrature Amplitude Modulation (QAM) are subjected is shown. For example, complex numbers corresponding to baseband signals obtained on a receiving side from signals output/transmitted via a PA are plotted. The 256 constellation points corresponding to the original modulation symbols are blurred due to nonlinear distortion.

When a signal-to-noise ratio (SNR) at a receiver increases, interference of nonlinear distortion (for example, an increase in a peak-to-average power ratio (PAPR)) may limit performance of the receiver, and therefore become a primary factor in the detection of errors.

### (Application of Artificial Intelligence (AI) Technology to Radio Communication)

For future radio communication technologies, the use of AI techniques, such as Machine Learning (ML), is being considered for control, management, and the like of networks/devices.

For example, the use of AI techniques by a terminal (a user terminal, or User Equipment (UE))/Base Station (BS) is being considered, such as for improvement of Channel State Information (CSI) feedback (for example, overhead reduction, accuracy improvement, or prediction), improvement of beam management (for example, accuracy improvement, or prediction in a time/spatial domain), and improvement of positioning (for example, improvement of position estimation/prediction).

An AI model may output at least one piece of information, such as an estimated value, a predicted value, a selected operation, or classification, based on input information. The UE/BS may input channel state information, a reference signal measurement, and the like to an AI model, and may output high-accuracy channel state information/measurement/beam selection/position, future channel state information/radio link quality, and the like.

Note that, in the present disclosure, AI may be interpreted as an object (also referred to as a target, an entity, data, a function, a program, or the like) that has (implements) at least one of the following features:
- estimation based on observed or collected information;
- selection based on observed or collected information;
- prediction based on observed or collected information.

In the present disclosure, estimation, prediction, and inference may be interpreted interchangeably. In the present disclosure, estimate, predict, and infer may be interpreted interchangeably.

In the present disclosure, an object may be, for example, an apparatus or a device, such as a BS/UE. In the present disclosure, an object may correspond to a program/model/entity that operates in the apparatus.

For future radio communication technologies (e.g., 3GPP Rel. 19, 20, 21), the use of AI techniques to compensate for the above-mentioned nonlinear distortion is being considered.

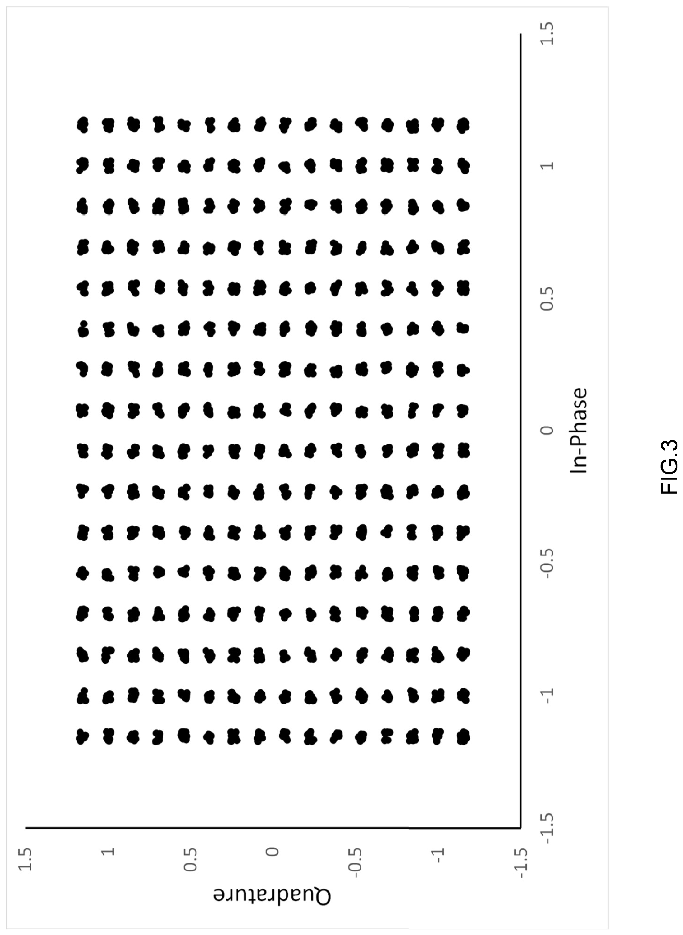

FIG. 3 is a diagram showing an example of compensation for nonlinear distortion caused by nonlinear characteristics of the PA. This example illustrates a case in which the nonlinear distortion in Fig. 2 is compensated for using a given AI technique. Points close to the original 256 constellation points are plotted, indicating that the influence of nonlinear distortion can be reduced by the AI technique.

The above-mentioned compensation for nonlinear distortion may be performed on a transmitter side/receiver side. For example, as one scenario of AI adoption, a single-sided model for one of a transmitter and a receiver may be adopted, and as another scenario, a double-sided model for both the transmitter and the receiver may be adopted.

In either scenario, the inventors of the present invention consider that the following should be considered:
- the UE reports which AI technique is applied in uplink transmission of the UE;
- the UE receives information on which AI technique should be applied in the uplink transmission of the UE; and
- the UE receives information on which AI technique is applied in downlink transmission of the UE.

As with the compensation of the above-described nonlinear distortion, how to perform the related configuration/control/communication for AI techniques that transform waveforms for communication has not yet been fully investigated. If these are not clearly defined, suitable waveform transformation cannot be performed, and there is a possibility that improvement in communication throughput/communication quality may be suppressed.

Therefore, the inventors of the present invention have conceived of a suitable configuration/control/communication method for waveform transformation. According to one aspect of the present disclosure, performance can be improved (for example, reduction in the nonlinear problem of the PA) by a waveform transformation function considering interaction between the UE and a network (NW).

Embodiments according to the present disclosure will be described in detail below with reference to the drawings. The radio communication methods according to the respective embodiments may be applied independently or may be applied in combination.

### (Various Replacements)

In the present disclosure, wording enclosed in "( )" in a sentence may indicate an explanation (e.g., an explanation of spelling), a paraphrase, a specific example, a supplementary explanation, or the like for wording immediately preceding it. Further, in the present disclosure, wording enclosed in "[ ]" in a sentence may be interpreted as being included in the meaning of the entire sentence, or may be interpreted as being excluded from (ignored in) the meaning of the entire sentence. Note that parentheses "( )" and brackets "[ ]" may be used for purposes/meanings other than those described above.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, monitoring, measurement/estimation, and the like may be performed by using a reference signal (RS). In the present disclosure, an RS may include at least one of a channel state information reference signal (CSI-RS), a synchronization signal (SS), a synchronization signal/broadcast channel (Synchronization Signal/Physical Broadcast Channel (SS/PBCH)) block, a demodulation reference signal (DMRS), a reference signal for measurement (Sounding Reference Signal (SRS)), and the like, for example.

Note that, in the present disclosure, a measured value, a measurement result, a received power (e.g., a reference signal received power (RSRP)), a received quality (e.g., a reference signal received quality (RSRQ), a signal to interference plus noise ratio (SINR), a signal to noise ratio (SNR), or a block error rate (BLER)), a signal strength (e.g., a received signal strength indicator (RSSI)), Channel State Information (CSI), PAPR, any metric regarding a measured received power/a received quality, or the like may be interpreted interchangeably. A measured value may mean a value that is actually measured, not a predicted value.

Note that "layer-X (LX (e.g., X = 1, 2, 3, ...))-" may be added to a measured value.

Note that, in the present disclosure, "any entity (e.g., a UE) performs ..." may be interchangeably interpreted as "any entity is configured/indicated to perform ..." .

In the present disclosure, a "condition(s)" may mean a set of candidate values/candidate parameters [that are associated with a function using AI] in a UE capability. In the present disclosure, an "additional condition(s)" may mean an aspect that is assumed for training but is not a condition (e.g., a beam direction of a BS, a codebook for a beam of a BS, or a point that is not associated with a UE capability).

In the present disclosure, a "functionality" may mean a set of parameters/features (e.g., a set of parameters for waveform transformation technology, CSI prediction, beam prediction, CSI compression, or the like) that are supported based on a condition indicated by a UE capability.

In the present disclosure, a "model identifier (ID)" may mean an ID (or a model corresponding to the ID) that is associated with a functionality/an additional condition. Note that a model ID may be interchangeably interpreted as an AI ID, a dataset ID, a pairing ID, or the like.

In the present disclosure, a function/a functionality may be interchangeably interpreted as any of a feature, a function, and a functionality.

In the present disclosure, a model and a model ID may be interpreted interchangeably. In the present disclosure, a functionality and a functionality ID may be interpreted interchangeably.

In the present disclosure, a bit block, a block of bits, a bit of a block, information [sequence] [that is transmitted], information, data, and the like may be interpreted interchangeably.

In the present disclosure, a complex-valued symbol, a complex value, a complex number, and the like may be interpreted interchangeably.

### (Radio Communication Method)

In the present disclosure, a waveform transformation function may include specific processing. When waveform-transformation-related functionalities/models are activated/reported/applied/configured/indicated for a UE, the UE may apply the above-mentioned specific processing (for example, the UE may apply the above-mentioned specific processing for a transmitter side/a receiver side), or the UE may assume that the above-mentioned specific processing is applied (for example, the UE may assume that the above-mentioned specific processing is applied at the transmitter side/the receiver side).

Note that, when a communication partner (a BS or a UE) applies the above-mentioned specific processing(or it is assumed that the above-mentioned specific processing is applied in the communication partner), the UE or the BS may perform a [corresponding] transmission/reception processing (e.g., waveform transformation, inverse transformation, correction, inverse correction, modulation, demodulation, mapping, demapping, spreading, despreading, inverse fast Fourier transform (IFFT), FFT, and the like) taking into account that the above-mentioned specific processing is applied.

In the following description, the specific processing described above is referred to as waveform transformation processing, but the designation is not limited to this. In the following description, it is mainly assumed that waveform transformation processing is applied on a transmitter side, but a part or all of the waveform transformation processing (or waveform inverse transformation processing corresponding thereto) may be applied on a receiver side. In the present disclosure, waveform transformation processing may include waveform inverse transformation processing.

Note that the waveform transformation processing may be applied to at least one of a specific channel (e.g., PUSCH, PUCCH, PDSCH, PDCCH, PBCH), a specific RS (e.g., DMRS, CSI-RS, SRS), and the like. Common waveform transformation processing may be applied to a plurality of channels/RSs.

In each embodiment, "functionality/model" may mean waveform transformation-related functionality/model unless otherwise noted.

### <First Embodiment>

A first embodiment relates to signal constellation compensation.

### <<Signal Processing at the Transmitting Side in Existing 3GPP NR Standard>>

Before describing signal constellation compensation, signal processing on a transmitting side in the existing 3GPP NR standard will be outlined. In the following description of the signal processing order, wording enclosed in "( )" indicates details of signal processing, the part before "=" preceding the wording indicates an input, and the part after "=>" preceding the "=" indicates an output.

In the case of PUSCH, signal processing basically proceeds in the following order: 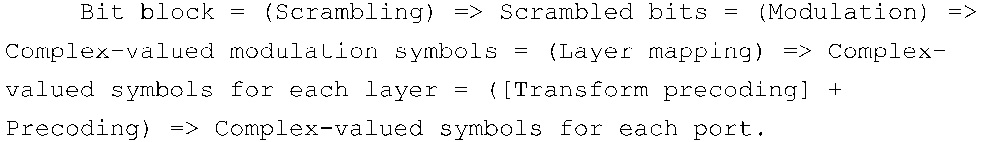 Bit block = (Scrambling) => Scrambled bits = (Modulation) => Complex-valued modulation symbols = (Layer mapping) => Complex-valued symbols for each layer = ([Transform precoding] + Precoding) => Complex-valued symbols for each port.

In the case of PDSCH, signal processing basically proceeds in the following order:
Bit block = (Scrambling) => Scrambled bits = (Modulation) => Complex-valued modulation symbols = (Layer mapping) => Complex-valued symbols for each layer = (Antenna port mapping) => Complex-valued symbols for each port.

In the case of PUCCH, for a PUCCH format including modulation, signal processing basically proceeds in the following order:
Bit block = (Scrambling) => Scrambled bits = (Modulation) => Complex-valued modulation symbols = [(Block-wise spreading)] => Complex-valued symbols = (Transform precoding) => Complex-valued symbols.

Note that in the case of PUCCH format 1, the signal processing ends with the modulation processing, and the complex-valued modulation symbols are mapped to physical resources. Furthermore, the block-wise spreading is not applied in PUCCH format 3; however, it is applied in PUCCH format 4. The block-wise spreading may be interpreted as a frequency domain orthogonal cover code (FD-OCC).

In the case of PDCCH, signal processing basically proceeds in the following order:
Bit block => (Scrambling) => Scrambled bits => (Modulation) => Complex-valued modulation symbols.

In the case of PBCH, signal processing basically proceeds in the following order:
Bit block => (Scrambling) => Scrambled bits => (Modulation) => Complex-valued modulation symbols.

The complex-valued modulation symbols are generated by a modulation mapper based on bits included in a bit block. For example, in the case of Quadrature Phase-Shift Keying (QPSK), a bit pair b(2i) and b(2i+1) is mapped to a complex-valued modulation symbol d(i) according to d(i) = 1/sqrt(2) · {(1-2b(2i)) + j(1-2b(2i+1))}.

A complex-valued symbol may be output after one or more signal processing operations are performed on the complex-valued modulation symbol, or may be the same as the complex-valued modulation symbol (for example, in the case of PDCCH/PBCH, the complex-valued modulation symbol is mapped to physical resources as a complex-valued symbol).

In the present disclosure, a complex-valued symbol may be interchangeably interpreted as a per-port/per-layer complex-valued symbol, a complex-valued symbol for a specific port/layer, a complex-valued symbol after block-wise spreading, or the like.

### <<Waveform Transformation Processing for Signal Constellation Compensation>>

Signal constellation compensation is a technique for reducing a peak-to-average power ratio (PAPR) problem, and mitigates nonlinear effects (for example, reduces a false detection rate on a receiving side) by shifting/scaling/rotating a signal constellation at a transmitter side/receiver side.

For example, in a case where an original modulation signal (a complex-valued modulation symbol) becomes a modulation signal with a small amplitude on the receiving side due to the transmitter/receiver, it is conceivable to perform compensation to increase the amplitude on the transmitting side.

In the first embodiment, waveform transformation processing for the signal constellation compensation may be performed/applied before IFFT processing.

In the first embodiment, the waveform transformation processing may include deciding a mapping for a complex-valued modulation symbol/complex-valued symbol based on a function associated with the functionality/model.

The mapping may be a mapping between the complex-valued modulation symbols and the bit blocks, or a mapping between the complex-valued modulation symbols/complex-valued symbols.

The mapping between the complex-valued modulation symbols/complex-valued symbols may be a mapping between groups of the complex-valued modulation symbols/complex-valued symbols (a mapping between the complex-valued modulation symbols/complex-valued symbols of a first group and the complex-valued modulation symbols/complex-valued symbols of a second group). For example, the complex-valued modulation symbols/complex-valued symbols of the first group (which may be referred to as group A) may be complex-valued modulation symbols derived from the bit block, and the complex-valued modulation symbols/complex-valued symbols of the second group (which may be referred to as group B) may be complex-valued modulation symbols/complex-valued symbols used to calculate signals to be transmitted.

In the first embodiment, the waveform transformation processing may include shifting/scaling the above-mentioned mapping for the complex-valued modulation symbols/complex-valued symbols (in other words, the complex-valued modulation symbols/complex-valued symbols obtained as a result of the above-mentioned mapping).

Note that shifting/scaling the complex-valued modulation symbols/complex-valued symbols may correspond to at least one of the following:
- the complex-valued modulation symbol/complex-valued symbol is multiplied (or assumed to be multiplied) by at least one of a scaling factor and a specific complex number; and
- the complex-valued modulation symbol/complex-valued symbol is rotated (or assumed to be rotated) by a specific angle (in units of radians or degrees).

Note that in the present disclosure, shifting may mean adding a given value (or a given complex value), and scaling/rotating may mean multiplying by a given value (or a given complex value).

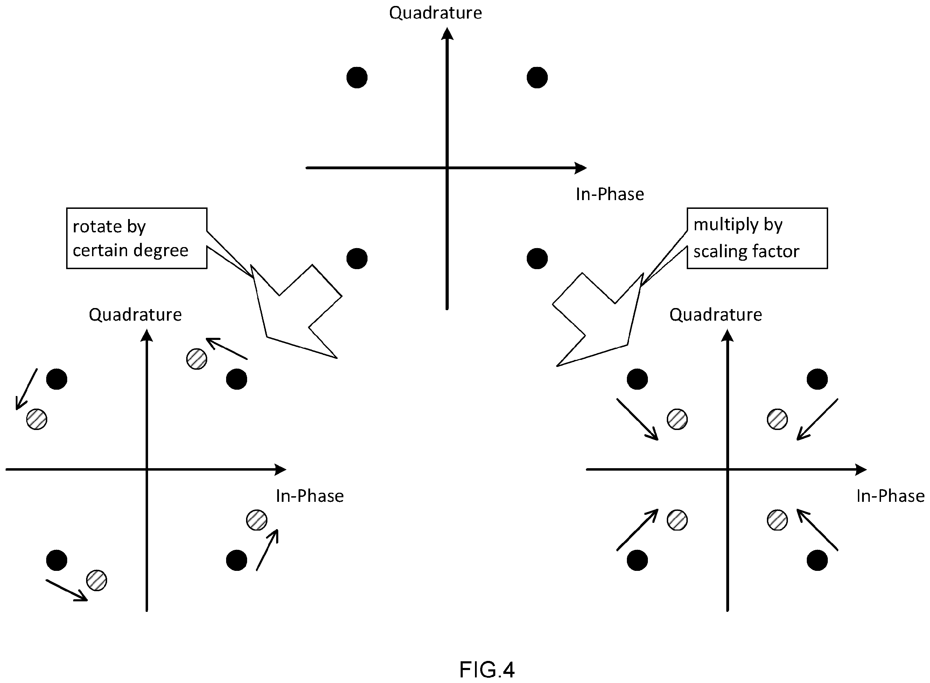

FIG. 4 is a diagram showing an example of rotation or scaling of complex-valued modulation symbols/complex-valued symbols in the first embodiment. In this example, results are shown of rotating the above-mentioned QPSK complex-valued modulation symbols d(i) (the four black circles in the center diagram) by a given angle (the four hatched circles in the lower-left diagram) and multiplying them by a scaling factor (the four hatched circles in the lower-right diagram).

In the first embodiment, how the above-described at least one mapping is decided, how the above-described at least one mapping is shifted/scaled, and the like may be determined based on associated functionalities/models (e.g., values related to shifting/scaling may be derived via the associated functionalities/models) or may be determined based on specific parameters. The specific parameter may be pre-defined, may include a parameter configured/indicated for the UE, or may include a UE-capability parameter.

For example, the above-mentioned scaling factor/specific complex number/specific angle may be determined based on the associated functionalities/models, or may be determined based on the above-mentioned specific parameter. In addition, the above-mentioned scaling factor/specific complex number/specific angle may be determined for each of X complex-valued modulation symbols/complex-valued symbols/bit blocks/ports/subcarriers/symbols. The X may be pre-defined, may be configured/indicated to the UE by higher-layer signaling/physical-layer signaling, may be determined based on UE capability, or may be determined based on the associated functionalities/models.

### <<Waveform Transformation Processing for RS>>

The waveform transformation processing for complex-valued modulation symbols/complex-valued symbols corresponding to data has been described above, and the waveform transformation processing may also be applied to a DMRS for a channel of the data. That is, in the first embodiment, the waveform transformation processing may include deciding a mapping for a DMRS sequence based on a function associated with the functionality/model, or may include shifting/scaling the DMRS sequence (or a sequence based on the mapping).

When the waveform transformation processing is applied to a complex-valued modulation symbol/complex-valued symbol corresponding to data, the UE/BS may assume that the waveform transformation processing is also applied to a DMRS sequence for a channel of the data, or may assume that the waveform transformation processing is not applied to the DMRS sequence (the waveform transformation processing is applied only to the former of the channel of the data and the corresponding DMRS).

The above-mentioned scaling factor/specific complex number/specific angle (hereinafter, these are collectively referred to as "DMRS coefficients") regarding the waveform transformation processing applied to a DMRS sequence may be derived based on the scaling factor/the specific complex number/the specific angle (hereinafter, these are collectively referred to as "data coefficients") regarding the waveform transformation processing applied to complex-valued modulation symbols/complex-valued symbols corresponding to data (for example, they may be the same or different).

The DMRS coefficients may be derived based on the data coefficients for a specific slot/a subcarrier/a symbol. The specific slot/subcarrier/symbol mentioned above may be the same slot/subcarrier/symbol. The DMRS coefficient may be derived based on the data coefficients for a plurality of slots/subcarriers/symbols. For example, the DMRS coefficient for a DMRS of a subcarrier may be an average/maximum/minimum value of the data coefficients for a plurality of data symbols for the same subcarrier.

A plurality of DMRS coefficients may each be derived based on the data coefficients for the same specific slot/subcarrier/symbol. DMRS coefficients for a plurality of slots/subcarriers/symbols may be the same or different from each other.

For RSs other than the DMRS (e.g., a CSI-RS, an SRS, or the like), the waveform transformation processing may be applied based on the description above with the DMRS being replaced by the RS.

According to the first embodiment described above, the UE/BS can appropriately perform signal constellation compensation.

### <Second Embodiment>

A second embodiment relates to a selective mapping (also referred to as a selected mapping).

A selective mapping is one technique for reducing the PAPR by changing the waveform.

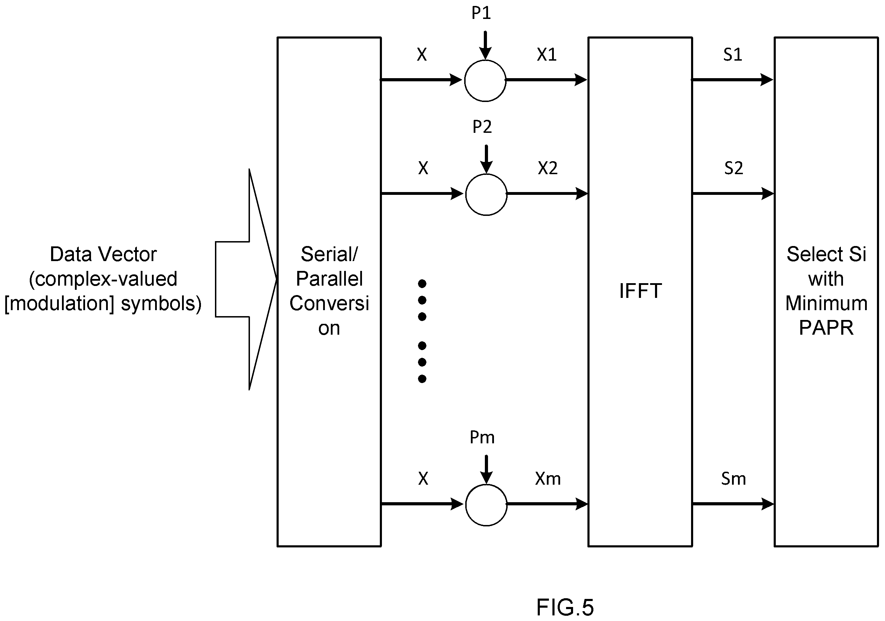

FIG. 5 is a diagram showing an example of a selective mapping. In a selective mapping, the transmitter side multiplies a data vector (e.g., one or more complex-valued [modulation] symbols or a set of complex-valued [modulation] symbols) by a specific sequence before the IFFT processing. For example, a data vector X is serial-to-parallel converted, and is multiplied by a specific sequence Pi (i = 1, ..., m, where m is an integer). IFFT processing is applied to Xi (Xi is X multiplied by Pi) after being multiplied, and a time-domain signal Si (Si corresponds to Xi) is output. Finally, PAPR values corresponding to the respective Si (i = 1, ..., m) are compared, and the Si/Xi/Pi corresponding to the minimum PAPR is selected. Note that Xi and Pi may be differ in length (for example, a length of Xi > a length of Pi), and multiplication in such a case will be described later.

That is, the multiplication described above is performed in the frequency domain. Information on the selected Si/Xi/Pi may be notified to the receiver side. On the receiver side, after applying FFT to a received signal, a data vector may be reconstructed based on the information notified regarding the selected Si/Xi/Pi.

Note that when the number (= m) of sequences serving as candidates Pi (which may be referred to as candidate sequences) is one, a selective mapping is equivalent to Frequency-Domain Spectral Shaping (FDSS).

In the second embodiment, the waveform transformation processing may include performing a selective mapping.

In the second embodiment, a selective mapping may be used to decide how the mapping related to the complex-valued modulation symbols/complex-valued symbols in the first embodiment is shifted/scaled (e.g., to decide the above-mentioned scaling factor/specific complex number/specific angle). In the second embodiment, a complex-valued modulation symbol/complex-valued symbol may be interchangeably interpreted as a set of complex-valued modulation symbols/a set of complex-valued symbols.

Such complex-valued modulation symbols/complex-valued symbols, which are shifted/scaled by multiplying the complex-valued modulation symbols/complex-valued symbols by factors of a specific sequence, may be derived. Assuming that the length of the specific sequence is N, each of the N complex-valued modulation symbols/complex-valued symbols may be multiplied by a corresponding factor of the specific sequence in order. The specific sequence may be selected from among one or more candidate sequences. Note that the factors of the specific sequence may be composed of 1, - 1, j (where j is the imaginary unit), and -j, may be values obtained by multiplying any of these by a coefficient, or may be any other arbitrary integers/real numbers/complex numbers. The factors of the specific sequence may correspond to the scaling factor/specific complex number/specific angle in the first embodiment.

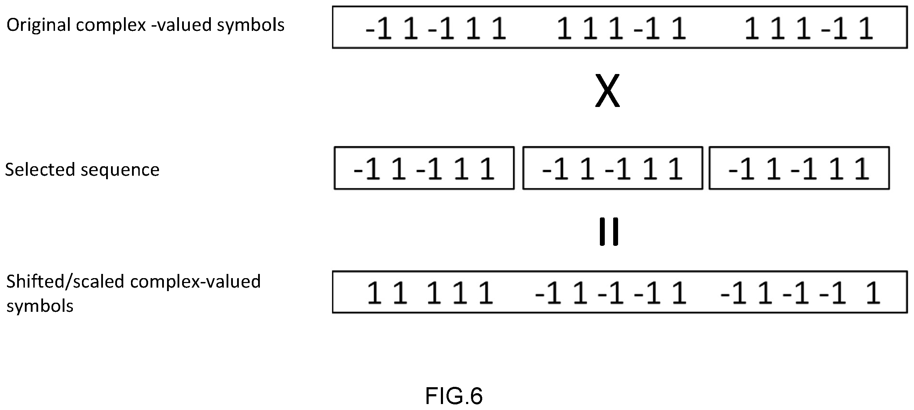

FIG. 6 is a diagram showing an example of a selective mapping in a second embodiment. In this example, a case is illustrated in which (-1, 1, -1, 1, 1), which is a sequence having a sequence length of 5, is selected as the specific sequence. The original complex-valued symbols include 15 symbols, and shifted/scaled complex-valued symbols are derived as a result of multiplying every five symbols, in order from the beginning, by the specific sequence.

Note that the mapping between groups of complex-valued modulation symbols/complex-valued symbols may be decided based on the specific sequence described above. For example, the second group of complex-valued modulation symbols/complex-valued symbols described above may be derived by multiplying the first group of complex-valued modulation symbols/complex-valued symbols described above by the factors of the specific sequence.

The above-mentioned candidate sequences may be pre-defined, may be configured for/indicated for the UE by higher layer-signaling/physical-layer signaling, may be determined based on a UE capability, or may be determined based on the associated functionality/model.

The sequence length of the above-mentioned specific sequence/candidate sequences may be pre-defined, may be configured/indicated to the UE by higher-layer signaling/physical-layer signaling, may be determined based on UE capabilities, or may be determined based on associated functionalities/models. The above-described sequence length may be a multiple (e.g., 0.5×, 1×, 2×, ...) of the number of subcarriers/resource elements (REs) per specific frequency unit (e.g., one resource block (RB)).

The above-mentioned specific sequence may be selected from candidate sequences according to any one or more of the following:
- one sequence, such that complex-valued [modulation] symbols shifted/scaled based on the sequence (and an IFFT result based on those symbols) achieve a minimum PAPR, is selected as the specific sequence;
- one sequence, such that complex-valued [modulation] symbols shifted/scaled based on the sequence (and an IFFT result based on these symbols) achieve a PAPR lower than a pre-defined/configured/indicated threshold, is selected as the specific sequence;
- the specific sequence is selected based on a result (e.g., an output) of functionalities/models to be activated or configured; and
- the specific sequence is selected based on a pre-defined/configured/indicated parameter or a UE-capability parameter.

### <<Mapping between Complex-Valued [Modulation] Symbols and Subcarriers>>

A mapping between the shifted/scaled complex-valued [modulation] symbols and subcarriers (or indices of resource elements (REs)/resource blocks (RBs) in the frequency domain) may be decided/changed/switched. In other words, the shifted/scaled complex-valued [modulation] symbols input to the IFFT in a selective mapping may be shifted/scaled complex-valued symbols with the order [corresponding to subcarriers] rearranged from the original order based on a specific mapping (specific rule).

The above-mentioned specific mapping (which may be referred to as a subcarrier mapping) may be selected from mappings serving as candidates (which may be referred to as a candidate mappings) according to any one or more of the following:
- one mapping, such that the shifted/scaled complex-valued [modulation] symbols with the order rearranged based on the mapping (and an IFFT result based on the symbols) achieve a minimum PAPR, is selected as the specific mapping;
- one mapping, such that the shifted/scaled complex-valued [modulation] symbols with the order rearranged based on the mapping (and an IFFT result based on those symbols) achieve a PAPR lower than a predefined/configured/indicated threshold, is selected as the specific mapping;
- the specific mapping is selected based on a result of functionalities/models to be activated or configured; and
- the specific mapping is selected based on a pre-defined/configured/indicated parameter or a UE-capability parameter.

Note that the above-mentioned specific mapping may be different for each of the above-mentioned candidate sequences.

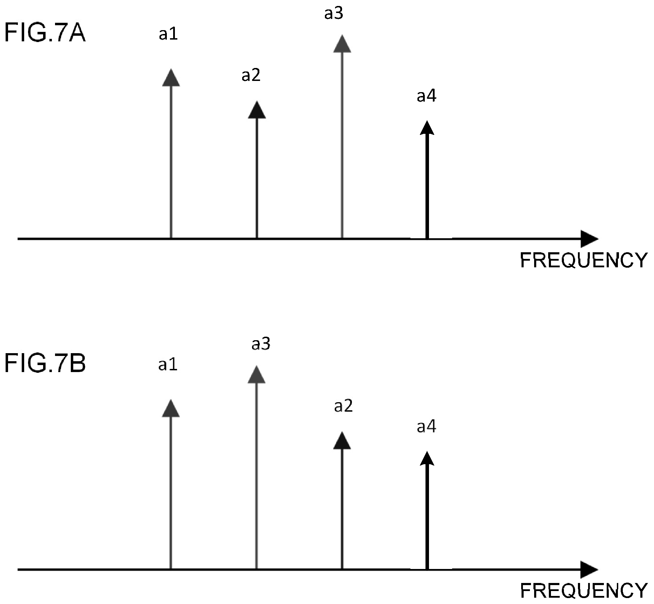

FIGS. 7A and 7B are diagrams showing an example of a change in a subcarrier mapping associated with a selective mapping in the second embodiment. In the original order shown in FIG. 7A, complex-valued symbols a1, a2, a3, and a4 are sequentially mapped in ascending order of subcarriers. In the changed order shown in FIG. 7B, the complex-valued symbols a1, a3, a2, and a4 are sequentially mapped in ascending order of subcarriers (that is, the order of a2 and a3 is switched).

The UE may report to the network information regarding which sequence/mapping is applied as the specific sequence/mapping. This information indicates the sequence/mapping selected by the UE.

The UE may receive from the network information regarding which sequence/mapping is applied (as the specific sequence/mapping). This information indicates the sequence/mapping selected by the network.

According to the second embodiment described above, the UE/BS can appropriately perform a selective mapping.

### <Third Embodiment>

A third embodiment relates to waveform transformation for reducing PAPR.

Waveform transformation in the third embodiment is classified into any of the following cases:
- Case 1: transforming an output sequence from IFFT;
- Case 2: transforming an output sequence after cyclic prefix (CP) insertion (addition);
- Case 3: transforming [and expanding] an output from IFFT;
- Case 4: transforming a complex value of size N in a frequency domain into a signal of size N + P in a time domain (N and P are integers); and
- Case 5: transforming a complex value of size N in a frequency domain into a signal of size N in a time domain (N is an integer).

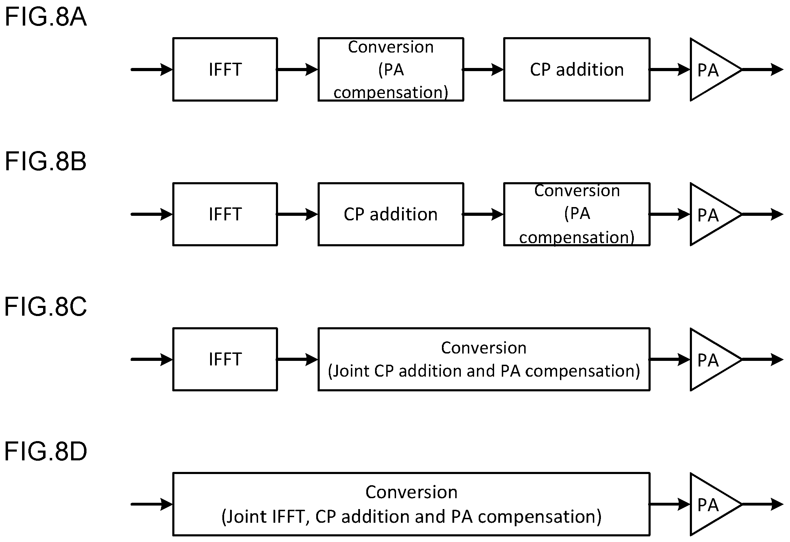

FIGS. 8A to 8D are diagrams showing examples of Cases 1 to 5 in the third embodiment. Waveform transformation in Cases 1 to 3 corresponds to processing after IFFT. In Case 1, an output sequence from IFFT is subjected to waveform transformation (PA compensation), is further subjected to CP insertion, and is input to a PA (FIG. 8A). In Case 2, an output sequence from IFFT is subjected to CP insertion, is further subjected to waveform transformation (PA compensation), and is input to a PA (FIG. 8B). In Case 3, an output sequence from IFFT is subjected to waveform transformation (corresponding to joint CP insertion and PA compensation) and is input to a PA (FIG. 8C).

Waveform transformation in Cases 4 and 5 above includes existing processing after IFFT and corresponds to processing that includes IFFT or replaces IFFT. In Cases 4 and 5, an original input to IFFT is subjected to waveform transformation (corresponding to joint IFFT, CP insertion, and PA compensation) and is input to a PA (FIG. 8D).

In Cases 1 to 3, waveform transformation processing may be interpreted as being applied to a time-continuous signal subsequent to IFFT processing. In Cases 4 and 5, waveform transformation processing may be interpreted as being applied to a complex-value prior to IFFT processing (where IFFT processing has not been performed).

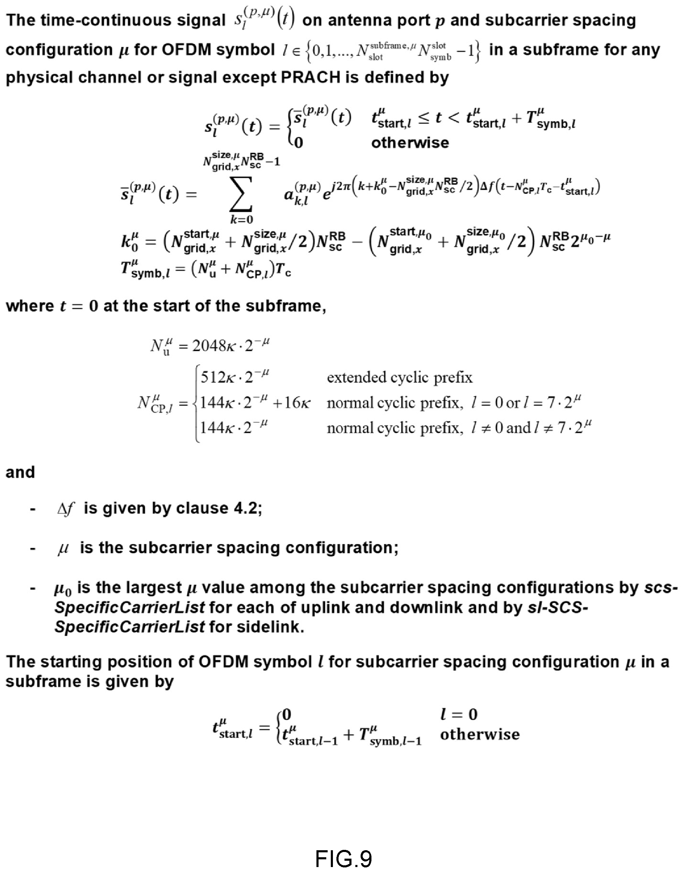

FIG. 9 is a diagram showing an example of a definition of a time-continuous signal in an existing 3GPP NR specification. This definition is described in 3GPP TS 38.211 §5.3.1. As defined, a time-continuous signal sₗ^{(p,µ)}(t) for an Orthogonal Frequency Division Multiplexing (OFDM) symbol l, in an antenna port p and a subcarrier spacing configuration mu, is calculated by IFFT based on a_{k,l}^{(p,µ)}. Here, a_{k,l}^{(p,µ)} is a complex value of a resource element (RE), which is a physical resource of a subcarrier index k (subcarrier index k) in the frequency domain and a symbol position index l in the time domain, for an antenna port p and a subcarrier spacing configuration µ.

In the third embodiment, the waveform transformation processing may include shifting or scaling a complex value a [to derive a complex value a'], where the complex value a is associated with at least one of [an antenna port index, a subcarrier spacing configuration index, and a [subcarrier/symbol position] index in the frequency/time domain with respect to a given reference point].

In the third embodiment, the waveform transformation processing may include shifting or scaling a time-continuous signal s [associated with at least one of an antenna port index, an Orthogonal Frequency Division Multiplexing (OFDM) symbol index [in a subframe], and a subcarrier spacing configuration index, and the like] [to derive a time-continuous signal s'].

Note that shifting/scaling the complex value/time-continuous signal may correspond to at least one of the following:
- the complex value/time-continuous signal is multiplied (or assumed to be multiplied) by at least one of a scaling factor and a specific complex number; and
- the complex value/time-continuous signal is rotated (or assumed to be rotated) by a specific angle, the unit of which is radians or degrees.

In the third embodiment, how at least one of the above-described shifting/scaling is performed may be determined based on associated functionalities/models (for example, a value related to the shifting/scaling may be derived via the associated functionalities/models), or may be determined based on a specific parameter. The specific parameter may be pre-defined, may include a parameter configured/indicated for the UE, or may include a UE-capability parameter.

For example, the above-mentioned scaling factor/specific complex number/specific angle may be determined based on the associated functionalities/models, or may be determined based on the above-mentioned specific parameter. In addition, the above-mentioned scaling factor/specific complex number/specific angle may be determined for each of X complex values/time-continuous signals/ports/subcarriers/symbols. The X may be pre-defined, may be configured/indicated to the UE by higher-layer signaling/physical-layer signaling, may be determined based on UE capability, or may be determined based on the associated functionalities/models.

In the third embodiment, the waveform transformation processing may include clipping (clipping) the complex value/time-continuous signal. The clipping may include at least one of the following processing operations performed when an [absolute] value is larger than a pre-defined/configured/indicated threshold:
- scaling a value such that the [absolute] value is equal to the threshold; and
- changing the [complex] value to a pre-defined/configured/indicated specific [complex] value.

The above-mentioned threshold/specific [complex] value may be pre-defined, may be configured/indicated for the UE by higher-layer signaling/physical-layer signaling, may be determined based on UE capabilities, or may be determined based on the associated functionalities/models.

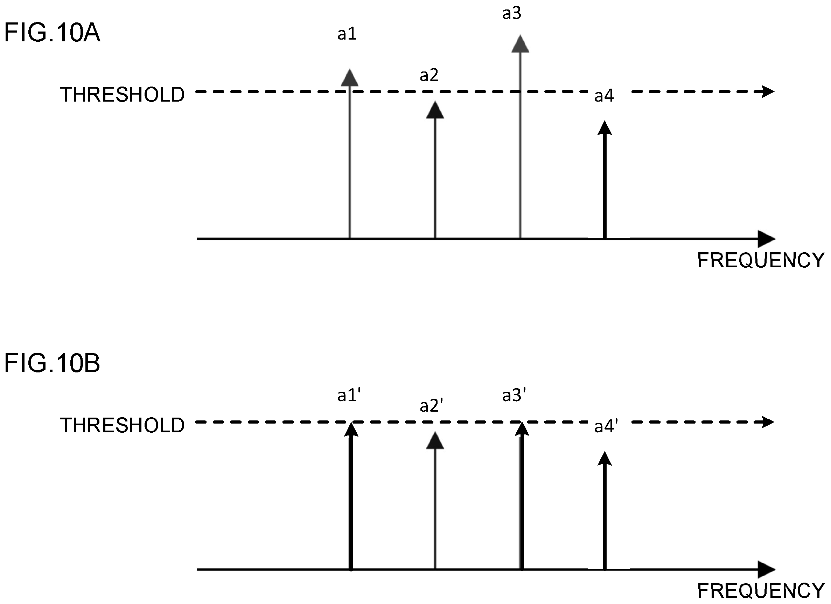

FIGS. 10A and 10B are diagrams showing an example of clipping in the third embodiment. In FIG. 10A, the absolute values (amplitudes) of complex values a1, a2, a3, and a4 before clipping are shown in ascending order of subcarriers. In FIG. 10B, the absolute values (amplitudes) of complex values a1', a2', a3', and a4' after clipping are shown in ascending order of subcarriers. In this example, a1 and a3, which were greater than the threshold, are changed by the clipping to a1' and a3' having the same absolute value as the threshold. Note that a2 and a4, which were less than or equal to the threshold, maintain the same absolute value even after the clipping (the absolute values of a2' and a4' are not changed from a2 and a4, respectively).

In the third embodiment, the waveform transformation processing may include transforming a complex value a into a time-continuous signal [to derive a time-continuous signal s']. Transforming the complex value into the time-continuous signal may correspond to at least one of the following:
- processing equivalent to the above-described shifting/scaling/clipping is performed;
- processing equivalent to CP insertion is performed; and
- processing equivalent to IFFT is performed.

In the waveform transformation in Case 1 described above, the complex value/time-continuous signal may be shifted/scaled/clipped only at a time not related to a cyclic prefix (OFDM symbol duration) (time t in Expression 1 described later).

In the waveform transformation in Case 2 described above, the complex value/time-continuous signal may be shifted/scaled/clipped only at a time related to a cyclic prefix and an OFDM symbol duration (time t in Expression 2 described later).

In the waveform transformation in Case 3 described above, the complex value/time-continuous signal may be transformed through an associated/indicated/configured functionality or model to be activated or configured for a time related to a cyclic prefix and an OFDM symbol duration (time t in Expression 2 described later). The complex value/time-continuous signal may be transformed based on the original complex value/time-continuous signal through a model corresponding to a functionality or through the above-mentioned model. Note that the [transformed] time-continuous signal may be an output of a model having the original time-continuous signal.

The foregoing Expressions 1 and 2 are as follows, respectively. 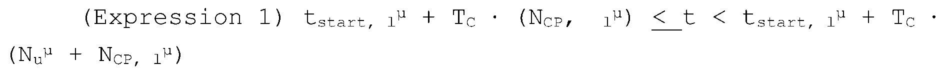 tstart, lµ + TC · (NCP, lµ) < t < tstart, lµ + TC · (Nuµ + NCP, lµ) ${{t}_{start , l}}^{μ} \leq t < {{t}_{start , l}}^{μ} + {T}_{C} ⋅ \left({{N}_{u}}^{μ}+{{N}_{CP , l}}^{μ}\right)$

Note that t_{start, l}^{µ}, Nᵤ^{µ}, N_{CP}, ₗ^{µ}, and the like may be as provided in FIG. 9. T_{C} may be T_{C} = 1/(Δfₘₐₓ · N_{f}), where Δfₘₐₓ = 480 · 10³ Hz, and N_{f} = 4096. Note that the definitions of T_{C}, Δfₘₐₓ, and N_{f} are not limited to these.

In the waveform transformation in Case 4 described above, the complex value may be transformed via an associated/indicated/configured functionality or model to be activated or configured into a time-continuous signal associated with a length equal to a cyclic prefix and an OFDM symbol duration. The time-continuous signal s may be transformed based on the original complex value a via the functionality.

In the waveform transformation in Case 5 described above, the complex value may be transformed via an associated/indicated/configured functionality or model into a time-continuous signal associated with an OFDM symbol duration. The time-continuous signal s may be transformed based on the original complex value a via the functionality.

According to the third embodiment described above, the UE/BS can appropriately perform the waveform transformation.

### <Fourth Embodiment>

A fourth embodiment relates to tone reservation (TR).

TR is a technique for reducing a PAPR by changing a waveform. In TR, peak reduction tone(s) (PRT(s)) are allocated in one or more subcarriers for clipping absorption/noise shaping. PRTs are orthogonal to each other.

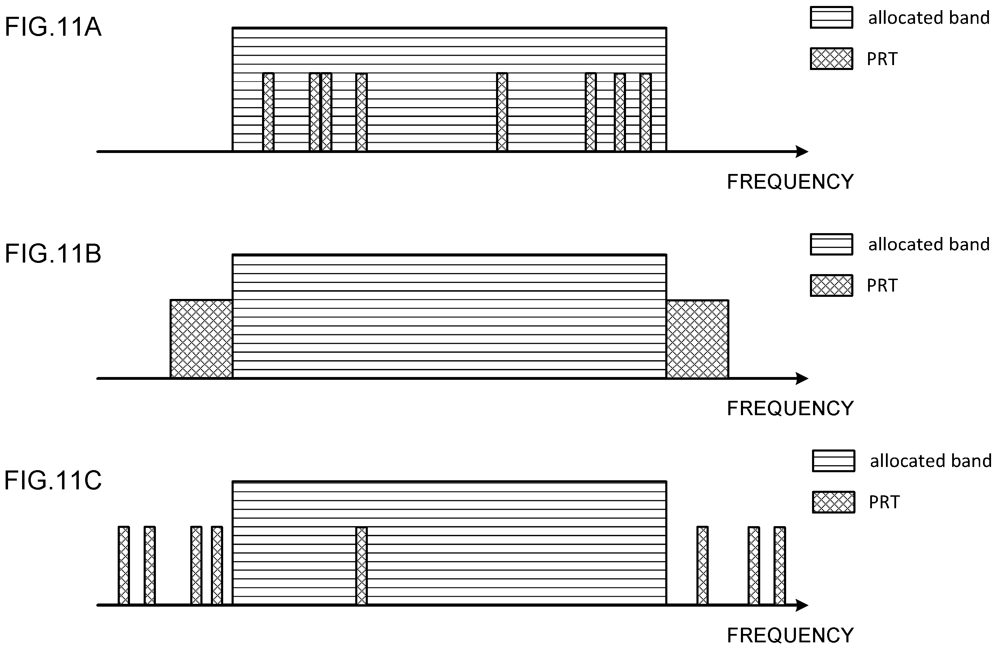

FIGS. 11A to 11C are diagrams showing an example of TR. FIG. 11A shows in-band TR in which PRTs are inside an allocated band. FIG. 11B shows a sideband TR in which the PRT is located outside the allocated band (for example, in an adjacent band). FIG. 11C shows a universal TR [sequence] in which a PRT common to all UEs is located both inside and outside the allocated band. Note that in the present disclosure, a band may be interchangeably interpreted as a subcarrier, an RE, an RB, a frequency [domain] resource, or the like.

In the fourth embodiment, the waveform transformation processing may include transmitting a signal that does not carry data (e.g., a signal associated with a [peak-reduction] tone). Here, transmitting a signal that does not carry data may correspond to at least one of the following:
- adding a specific signal to a time-continuous signal for data;
- deciding a specific complex value associated with a particular subcarrier/RE/RB without relying on data (for example, the specific complex value may be calculated while taking the data [signal] into account, but it is simply not a modulation symbol derived from the data); and
- adding a specific complex value to a complex value associated with a particular subcarrier/RE/RB.

In the fourth embodiment, the waveform transformation processing may include transmitting a signal that carries data on subcarriers/REs/RBs other than particular subcarriers/REs/RBs. In this case, the complex value based on the data is mapped to subcarriers/REs/RBs other than the particular subcarriers/REs/RBs.

In the fourth embodiment, constraints may be applied to the multiplexing or mapping of data-associated values and no-data-associated values. The constraints may include at least one of the following:
- the UE does not expect that a complex value based on the data is mapped to the particular subcarriers/REs/RBs; and
- a complex value based on the data may also be mapped to the particular subcarriers/REs/RBs.

In the fourth embodiment, the above-described particular signal, the above-described particular complex value, and the above-described particular subcarriers/REs/RBs may be determined based on associated functionalities/models (for example, may be derived through the associated functionalities/models), may be determined based on results (for example, outputs) of functionalities/models to be activated or configured, or may be determined based on particular parameters. The specific parameter may be pre-defined, may include a parameter configured/indicated for the UE, or may include a UE-capability parameter.

The above-described particular subcarriers/REs/RBs may be referred to as signal subcarriers/REs/RBs associated with [peak-reduction] tones.

The above-described particular subcarriers/REs/RBs may not overlap with subcarriers/REs/RBs that are mapped to transmission of a signal that carries data. In this case, in a sideband TR, the particular subcarriers/REs/RBs may be located outside the subcarriers/REs/RBs that are mapped to transmission of a signal that carries data (for example, may be adjacent to thereto). In an in-band TR, the particular subcarriers/REs/RBs may be located inside the subcarriers/REs/RBs that are mapped to transmission of a signal that carries data.

The above-described particular subcarriers/REs/RBs may be located inside the subcarriers/REs/RBs that are mapped to transmission of a signal that carries data (or may overlap with the subcarriers/REs/RBs that are mapped to transmission of a signal that carries data). In this case, for example, the data and the [peak-reduction] tones may be multiplexed on the same subcarriers/REs/RBs.

According to the fourth embodiment described above, the UE/BS can appropriately perform TR.

### <Fifth Embodiment>

A fifth embodiment relates to functionalities/models to be supported, applicable functionalities/models, and the like.

In the present disclosure, the functionalities/models [supported by the UE (or BS)] may refer to functionalities/models for which the UE (or BS) can apply/activate features related to the functionalities/models [when the status of the UE (or BS) is appropriate/good].

In the present disclosure, the applicable functionalities/models may correspond to at least one of the following:
- functionalities/models that achieve a metric (for example, a performance metric) that is greater/smaller than a pre-defined/configured/indicated threshold; and
- a model that satisfies additional conditions associated with the model and is aligned with the real environment.

The UE (or BS) may determine that, even if a functionality/model is supported, the UE (or BS) cannot apply/activate the functionality/model unless it is an applicable functionality/model.

The UE may receive, from a network, a notification instructing the reporting of supported/applicable waveform-transformation-related functionalities/models (hereinafter also referred to as a reporting request or the like). The reporting request may include information for identifying functionalities/models for which the UE should report whether they are supported, or may include information for identifying functionalities/models for which the UE should report that they are applicable.

The UE [having received the reporting request] may report supported/applicable waveform-transformation-related functionalities/models. This reporting may use, for example, at least one of the following messages:
- a UECapabilityInformation message (i.e., UE capability information);
- a UEAssistanceInformation message (i.e., UE assistance information (UAI), assistance information); and
- an RRCReconfigurationComplete message (i.e., RRC reconfiguration complete).

The UE that has received the aforementioned reporting request may report only waveform-transformation-related functionalities/models that are identified by the reporting request as being supported or applicable.

The UE may report only information on functionalities/models among the supported/applicable functionalities/models whose state (e.g., supportability/applicability) has been updated since the most recent reporting.

In the following description, "UE" may be interchangeably interpreted as "UE/BS". In the present disclosure, "applicability [of a model/functionality]" may be interchangeably interpreted as "support/applicability [a waveform-transformation-related] [model/functionality]", and "applicability [of a model/functionality]" may be interchangeably interpreted as "a supported/applicable [waveform-transformation-related] functionality/model". In the present disclosure, "[in]applicable" may be interchangeably interpreted as "[un]supportable/[in]applicable". Note that "supportable" may be interchangeably interpreted as "supporting", and "unsupportable" may be interchangeably interpreted as "not supporting".

### <<Decision/Determination of Applicability>>

The UE may decide/determine the applicability of models/functionalities based on at least one of the conditions/rules shown in Options 1 to 4 below.

### <Option 1>

The UE may decide/determine the applicability of models/functionalities based on Key Performance Indicators (KPIs) related to performance (also referred to as performance KPIs). More specifically, the UE may decide/determine the applicability of models/functionalities based on whether a performance KPI is greater or smaller than a given specific requirement (threshold).

Note that performance KPIs may include, for example, any of the following or any combination thereof:
- intermediate KPIs;
- link-level and system-level performance; and
- generalization performance.

The above threshold may be configured/indicated by higher-layer signaling/physical-layer signaling, and may be pre-defined by the specification.

Performance KPIs may be configured/indicated by higher-layer signaling or physical-layer signaling.

Performance KPIs may be calculated over a given duration. For example, an average value of performance over a given duration may be used as the performance KPI.

When a performance KPI is greater than a given threshold, the UE may decide/determine the corresponding model/functionality to be applicable. When the KPI is smaller than a given threshold, the UE may decide/determine the corresponding model/functionality to be inapplicable.

### <Option 2>

The UE may decide/determine the applicability of models/functionalities based on the UE status (UE condition) shown in Options 2-1 to 2-4, including:
- an overheating condition (Option 2-1);
- computational resources (Option 2-2);
- memory storage (Option 2-3); and
- power battery (Option 2-4).

For example, the UE may compare the statuses in Options 2-1 to 2-4 described above with a given specific threshold, and may decide/determine the applicability of models/functionalities based on the result.

### <Option 3>

The UE may decide/determine the applicability of models/functionalities based on assistance information received from the NW. For example, when a state/condition of a model/functionality matches the assistance information received from the NW, the UE may decide/determine that the model/functionality is applicable. Note that the assistance information will be described later (for example, Option 1-4 of Embodiment 3-1).

### <Option 4>

The UE may decide/determine the applicability of models/functionalities based on sensing information (detection information). Sensing information may be any information (such as measurements/detection values) detected by the UE, for example, L1-RSRP/SINR or information related to the surrounding environment.

For example, when a state/condition of a model/functionality matches the sensing information, the UE may decide/determine that the model/functionality is applicable.

For each of the options described above, the UE may be configured with a higher-layer parameter for deciding whether to apply any of the options (that is, whether to decide/determine the applicability of models/functionalities based on any of the options).

In the present disclosure, the conditions/rules of Options 1 to 4 may be referred to as factors for applicability.

### <<Reporting Applicability>>

### <<<NW-Initiated Reporting>>>

First, a case is described in which the NW takes the initiative in initiating reporting the applicability of models/functionalities.

The NW may initiate reporting the applicability of models/functionalities based on at least one condition/rule shown in Options 1-1 to 1-4 below. In this case, the UE may report an update of the applicability based on a trigger (such as an instruction to start reporting) from the NW.

### <Option 1-1>

The UE may report the applicability of models/functionalities based on configuration from the NW. For example, the UE may periodically report an update of the applicability based on a configured period/pre-defined period.

### <Option 1-2>

The UE may report the applicability of models/functionalities based on configuration from the NW. For example, when the serving cell is changed (switched), the UE may periodically report an update of the applicability.

### <Option 1-3>

The UE may report the applicability of models/functionalities based on an inquiry/instruction from the NW. For example, when the UE receives an inquiry/instruction from the NW to report the applicability, the UE may report an update of the applicability.

### <Option 1-4>

When the UE receives at least one piece of assistance information shown below, the UE may report an update of the applicability. The assistance information may include at least one of the following, in addition to the information described above.
- Dataset information (for example, a dataset ID may be defined that represents characteristics of channels in which the UE is present/nearby, or characteristics of measurement values obtainable by the UE).
- NW deployment (location) information (for example, a NW deployment ID that represents the deployment of gNBs may be defined).
- Environment information (for example, an environment ID may be defined that represents the environment in which the UE is located, such as a LOS/NLOS environment).

By utilizing such assistance information, the UE can appropriately decide/determine the applicability of models/functionalities based on the received assistance information.

### <<<UE-Initiated Reporting>>>

Next, a case is described in which the UE takes the initiative in starting (triggering) reporting the applicability of models/functionalities.

The UE may initiate transmission (reporting) of the applicability when a configured or pre-defined rule is satisfied. Specifically, the UE may initiate reporting the applicability of models/functionalities based on at least one condition/rule shown in Options 1 to 6 below.

### <Option 1>

The UE may initiate reporting of the applicability when a specific higher-layer parameter (an RRC parameter) is configured. The higher-layer parameter may be a parameter related to reporting updates of the applicability. Note that the higher-layer parameter may also be associated with the factors for the applicability as described in Options 1 to 4 under "Decision/Determination of Applicability" above.

### <Option 2>

When the UE is not reporting (transmitting) the applicability and at least one of Options 2-1 to 2-3 below is satisfied, the UE may initiate reporting the applicability.

### [Option 2-1]

The UE is configured with a given higher-layer parameter for reporting updates of the applicability.

### [Option 2-2]

The UE is reporting (transmitting) at least one of configurable models/functionalities and states (conditions) of the models/functionalities.

### [Option 2-3]

The UE is configured with models/functionalities. That is, the configured models/functionalities are decided/determined.

### <Option 3>

When the applicability differs from the applicability reported/indicated in the last (most recent) reporting (transmission), the UE may initiate reporting the applicability. The types of cases in which the applicability differs can be broadly classified into Options 3-1 to 3-3 below. Note that Options 3-1 to 3-3 may correspond to Options 1 to 3 in the first embodiment described above.

### [Option 3-1]

When the applicability of configurable models/functionalities differs from the applicability of the indicated

### models/functionalities.

### [Option 3-2]

When the applicability of the configured models/functionalities differs from the applicability of the indicated models/functionalities.

### [Option 3-3]

When the applicability of the activated/monitored models/functionalities differs from the applicability of the indicated models/functionalities.

### <Option 4>

When a given timer related to reporting of the applicability is not running, the UE may initiate reporting the applicability. The length of the timer may be configured/indicated by higher-layer signaling or physical-layer signaling, or may be pre-defined by the specification. For example, when the length of the timer is not configured/indicated, a default value/initial value may be decided based on a pre-defined value. Note that the timer may be associated with the factors for the applicability described in Options 1 to 4 of the second embodiment, or with given models/functionalities.

### <Option 5>

When there are inapplicable models/functionalities, the UE may initiate reporting the applicability. The types of cases in which inapplicable models/functionalities exist can be broadly classified into Options 5-1 to 5-3 below. Note that Options 5-1 to 5-3 may correspond to Options 1 to 3 in the first embodiment described above.

### [Option 5-1]

When at least one of the configurable models/functionalities is inapplicable.

### [Option 5-2]

When at least one of the configured models/functionalities is inapplicable.

### [Option 5-3]

When at least one of the activated/monitored models/functionalities is inapplicable.

### <Option 6>

When there are applicable models/functionalities, the UE may initiate reporting the applicability. The types of cases in which applicable models/functionalities exist can be broadly classified into Options 6-1 to 6-3 below. Note that Options 6-1 to 6-3 may correspond to Options 1 to 3 in the first embodiment described above.

### [Option 6-1]

When at least one of the configurable models/functionalities is applicable.

### [Option 6-2]

When at least one of the configured models/functionalities is applicable.

### [Option 6-3]

When at least one of the activated/monitored models/functionalities is applicable.

### <<UE Operation When Initiating Reporting the Applicability>>

When the UE initiates reporting the applicability, it may perform at least one of the operations in Options 1 to 3 below.

### <Option 1>

The UE may set the information to be reported (the information to be subjected to reporting). Furthermore, the UE may apply at least one of the operations in Options 1-1 to 1-2.

### [Option 1-1]

The UE may set parameters based on the applicability (for example, RRC parameters). The parameter may be associated with the factors for the applicability described in Options 1 to 4 of the second embodiment.

For example, the parameter described above may be a bit sequence in which each bit corresponds to the applicability of a model/functionality. More specifically, one of the values "0" or "1" may indicate that the model/functionality is applicable, and the other of "0" or "1" may indicate that the model/functionality is inapplicable.

### [Option 1-2]

The UE may decide/determine whether to include the parameter in a specific information element (IE). For example, when at least one of Conditions 1 to 3 below is satisfied, the UE may include the parameter in a specific information element.

### (Condition 1)

When the parameter is set according to Option 1-1 described above.

### (Condition 2)

When at least one of the configurable models/functionalities is configured.

### (Condition 3)

When at least one of the models/functionalities is activated or monitored.

When at least one of Conditions 1 to 3 described above is not satisfied, the UE need not include the parameter in the specific information element.

### <Option 2>

The UE may report at least one of the pieces of information shown below to the NW:
- the parameter or the specific information element described in Option 1;
- information regarding the applicability; and
- information for identifying the model/functionality for which the applicability is to be reported.

### <Option 3>

The UE may start a given timer (which may be the same as the timer described above). When the timer is running, the UE need not initiate an update of the applicability.

### <<Constraints on Reporting the Applicability>>

The UE need not be expected to be configured with an inapplicable model/functionality after a given duration from receiving signaling related to reporting the applicability.

The UE need not be expected to be configured to monitor an inapplicable model/functionality after a given duration from receiving signaling related to reporting the applicability.

The UE need not be expected, after a given duration from receiving signaling related to reporting the applicability, to activate an inapplicable model/functionality or to receive an instruction related to activation of an inapplicable model/functionality.

The given duration described above may be in units of X symbols, slots, subframes, or milliseconds (ms). Here, X may be any real number greater than or equal to 0, may be configured/indicated by higher-layer signaling or physical-layer signaling, and may be pre-defined by the specification.

In the present disclosure, signaling related to reporting the applicability may be at least one of the following:
- signaling including information on the applicability of a model/functionality (for example, PUSCH/PUCCH transmission); and
- a PDCCH reception including a DCI format that schedules a PUSCH transmission having the same HARQ process number as a transmission of the applicability report (PUSCH/PUCCH transmission) and having a New Data Indicator (NDI) field value that is toggled.

According to the fifth embodiment described above, the UE/BS can be appropriately controlled based on supported functionalities/models, applicable functionalities/models, and the like.

### <Sixth Embodiment>

A sixth embodiment relates to performance monitoring.

The UE may [be configured/indicated to] perform performance monitoring for waveform-transformation-related functionalities/models. The performance monitoring may include calculating performance metrics, deriving reporting content based on the calculated performance metrics, and reporting the derived content.

Note that in the sixth embodiment, the network may decide which functionalities/models are to be activated at the UE.

### <<Calculation of Performance Metrics>>

The performance metrics are metrics representing the performance of the functionalities/models, and may include, for example, any of the following metrics or combinations thereof:
- the (hypothetical) BLER of PDCCH/PUCCH/PUSCH/PDSCH under the waveform-transformation-related functionalities/models;
- the (hypothetical) BLER gap (difference) of PDCCH/PUCCH/PUSCH/PDSCH between the presence and absence of the waveform-transformation-related functionalities/models;
- PAPR/RSRP/SINR values under the waveform-transformation-related functionalities/models; and
- PAPR/RSRP/SINR value gaps (differences) between the presence and absence of the waveform-transformation-related functionalities/models.

Which metrics are to be calculated may be determined based on the associated functionalities/models, or may be determined based on specific parameters. The specific parameter may be pre-defined, may include a parameter configured/indicated for the UE, or may include a UE-capability parameter.

The samples for calculating the performance metrics may be based on any of the following or combinations thereof:
- the performance metrics may be statistical values for a specific time (e.g., slot/symbol/subframe/millisecond);
- the performance metrics may be statistical values over a given number of measurements/measurement opportunities; and
- the performance metrics may be statistical values over a given number of resources/resource opportunities/transmission opportunities.

In other words, the performance metrics may be calculated based on samples obtained at the above specific time or over the above given number of measurements/measurement opportunities/resources/resource opportunities/transmission opportunities.

The above specific time, the above given number, and the like may be determined based on the associated functionalities/models, or may be determined based on specific parameters. The specific parameter may be pre-defined, may include a parameter configured/indicated for the UE, or may include a UE-capability parameter.

A channel/RS used/assumed/measured to calculate a performance metric may be determined based on an associated functionality/model, or may be determined based on a specific parameter. The specific parameter may be pre-defined, may include a parameter configured/indicated for the UE, or may include a UE-capability parameter.

### <<Reporting Based on Performance Monitoring>>

The UE may transmit a report (which may be referred to as a performance-monitoring report, a performance-metric report, a performance report, etc.) based on the performance monitoring (calculation of performance metrics), the report including at least one of the following:
- an activation/deactivation recommendation;
- a functionality/model recommendation;
- calculated metrics associated with the functionalities/models to be configured/indicated; and
- whether the calculated metrics associated with the functionalities/models to be configured/indicated are greater or smaller than a pre-defined/configured/indicated threshold.

The activation/deactivation recommendation may include information on whether it is recommended to apply/activate the functionality to be configured/indicated or the model [associated with the functionality] to be configured/indicated. The functionality/model recommendation may include information indicating which functionality or model, among a plurality of functionalities to be configured/indicated or a plurality of models [associated with the functionality] to be configured/indicated, is recommended or not recommended to be applied/activated.

Note that the activation/deactivation recommendation, the functionality/model recommendation, and the like may be based on the calculated metrics. For example, a model, among a plurality of models associated with the functionality, that achieves the maximum/minimum metric may be recommended.

The UE may initiate the performance reporting when at least one of the following conditions is satisfied:
- a [current or newly derived] activation/deactivation recommendation changes from the activation/deactivation recommendation reported in the most recent report;
- a [current or newly derived] functionality/model recommendation changes from the functionality/model recommendation reported in the most recent report;
- a calculated metric associated with the functionality/model to be configured/indicated is greater than/smaller than a pre-defined/configured/indicated threshold; and
- the UE is configured/indicated by the network to perform performance reporting.

According to the sixth embodiment described above, the UE/BS can appropriately perform performance monitoring/performance reporting.

### <Seventh Embodiment>

A seventh embodiment relates to the application (activation) of a functionality/model.

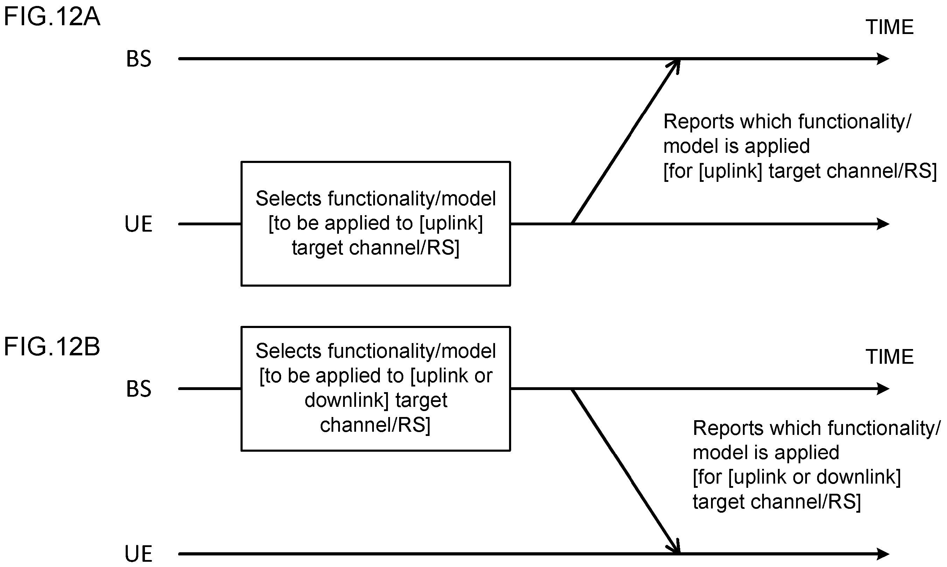

FIGS. 12A and 12B are diagrams showing an example of a flow of application of a functionality/model in the seventh embodiment. In the following description, these figures are referred to as appropriate.

### <<Autonomous Determination of the UE Regarding Uplink Transmission>>

In the seventh embodiment, it may be assumed that the UE decides which functionality/model is to be activated for uplink transmission. The UE may apply/activate a waveform-transformation-related functionality/model from among functionalities/models that are pre-defined/configured/indicated.

As shown in FIG. 12A, the UE may select (decide) a functionality/model [to be applied to the target channel/RS [in uplink],] [based on the performance metrics described in the sixth embodiment]. The UE may select a model based on additional conditions associated with the model. Note that, in the seventh embodiment, the target channel/RS may mean a channel/RS in which a waveform-transformation-related functionality/model is applied/activated in the channel/RS.

As shown in FIG. 12A, the UE may notify (report) the NW (BS) of which a waveform-transformation-related functionality/model is to be applied/activated [for the target channel/RS [in uplink]].

The UE may notify which waveform-transformation-related functionality/model is applied/activated in the target channel/RS, by ports/sequences of DMRS associated with the target channel/RS (for example, PUSCH DMRS when the target channel is PUSCH). Here, a mapping between ports/sequences of the DMRS and a waveform-transformation-related functionality/model that is associated therewith may be pre-defined/configured/indicated.

The UE may notify which waveform-transformation-related functionality/mode is applied/activated in the target channel/RS, by PUCCH of a scheduling request [for transmission] of the target channel/RS. For example, a functionality/model may be indicated by parameters/elements associated with the above PUCCH. The parameters/elements may include at least one of, for example, a PUCCH resource, a PUCCH format, a sequence of the PUCCH, a scheduling request ID, and the like. The mapping between [the parameters/elements associated with] the above PUCCH and the relevant waveform-transformation-related functionality/model may be pre-defined/configured/indicated.

The UE may perform transmission processing of the target channel/RS by applying (or based on) waveform-related processing [in the first to fourth embodiments] that is associated with a functionality/model decided to be activated.

### <<Notification to the UE Regarding Downlink Transmission>>

In the seventh embodiment, as shown in Fig. 12B, it may be assumed that the network decides which functionality/model is activated for [the target channel/RS of] downlink transmission, and notifies the UE of the decided functionality/model.

The UE may be assumed to apply/activate, among functionalities/models that are pre-defined/configured/indicated, a waveform-transformation-related functionality/model that corresponds to at least one of the following [in the target channel/RS [in downlink]]:
- First: functionality/model indicated/configured by the network;
- Second: functionality/model indicated via DCI that schedules/activates/triggers the target channel/RS;
- Third: functionality/model indicated via a PDCCH that transmits the DCI that schedules/activates/triggers the target channel/RS;
- Fourth: functionality/model indicated via a MAC CE that activates the target channel/RS; and
- Fifth: functionality/model derived from ports/sequences of DMRS associated with the target channel (for example, PDSCH/PDCCH).

Note that the target channel/RS here may be a downlink channel/RS.

Regarding the above second item, for example, the waveform-transformation-related functionality/model that is applied to the target channel/RS associated therewith may be notified to the UE via DCI that schedules/activates/triggers the target channel/RS.

Regarding the above third item, the functionality/model may be indicated by parameters/elements associated with the above PDCCH. The parameters/elements may include, for example, at least one of a Control Channel Element (CCE) index, a PDCCH candidate, a related COntrol REsource SET (CORESET)/search space set in which the UE detects the corresponding DCI, and the like. The mapping between the parameters/elements associated with the above PDCCH and the relevant waveform-transformation-related functionality/model may be pre-defined/configured/indicated.

Regarding the above fifth item, the mapping between the ports/sequences of the above DMRS and the relevant waveform-transformation-related functionality/model may be pre-defined/configured/indicated.

The UE may perform reception processing of the target channel/RS by applying (or based on) waveform-related processing [in the first to fourth embodiments] associated with a functionality/model that is notified to be activated.

### <<Notification to the UE Regarding Uplink Transmission>>

In the seventh embodiment, as shown in Fig. 12B, it may be assumed that the network decides which functionality/model is activated for [the target channel/RS of] uplink transmission, and notifies the UE of the decided functionality/model.

The UE may apply/activate, [among functionalities/models that are pre-defined/configured/indicated,] a waveform-transformation-related functionality/model based on at least one of the following [in the target channel/RS [in uplink]]:
- First: information indicated/configured by the network [associated with the functionality/model];
- Second: DCI that schedules/activates/triggers the target channel/RS;
- Third: a PDCCH that transmits the DCI that schedules/activates/triggers the target channel/RS; and
- Fourth: a MAC CE that activates the target channel/RS.

Note that the target channel/RS here may be an uplink channel/RS.

Regarding the above second item, for example, the waveform-transformation-related functionality/model that is applied to the target channel/RS associated therewith may be notified to the UE via DCI that schedules/activates/triggers the target channel/RS.

Regarding the above third item, the functionality/model may be indicated by parameters/elements associated with the above PDCCH. The parameter/element may include, for example, at least one of a Control Channel Element (CCE) index, a PDCCH candidate, a CORESET/search space set in which the UE detects the corresponding DCI, and the like. The mapping between the parameters/elements associated with the above PDCCH and the relevant waveform-transformation-related functionality/model may be pre-defined/configured/indicated.

The UE may perform transmission processing of the target channel/RS by applying (or based on) waveform-related processing [in the first to fourth embodiments] associated with a functionality/model that is notified to be activated.

### <<Constraints on Simultaneous Application/Simultaneous Activation>>

The UE need not be expected [to be configured/indicated] to simultaneously apply/activate a plurality of waveform-transformation-related functionalities/models that fall under at least one of the following:
- a plurality of models associated with the same functionality;
- a plurality of specific functionalities that are pre-defined/indicated/configured; and
- a plurality of models associated with a plurality of specific functionalities that are pre-defined/indicated/configured.

The UE may perform uplink transmission/downlink reception by applying waveform-transformation processing associated with a functionality/model that is activated.

According to the seventh embodiment described above, the UE/BS can appropriately apply/activate the functionality/model.

### <Supplements>

### <<Notification of Information to UE>>

Notification of any information to a UE [from an NW] (in other words, reception of any information in the UE from the BS) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### <<Notification of Information from UE>>

Notification of any information from a UE [to an NW] (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### <<Regarding Application of Each Embodiment>>

In a US/BS, specific (one or a plurality of) processing/operation/control/assumption/information about at least one of the above-described embodiments may be applied (may be used) when any one of or a plurality of the following conditions are satisfied:
- higher layer parameter indicating the specific processing/operation/control/assumption/information is configured,
- the specific processing/operation/control/assumption/information is determined based on a related higher layer parameter,
- the specific processing/operation/control/assumption/information is indicated/activated/triggered by a MAC CE/DCI/UCI/resource/channel/RS,
- the specific processing/operation/control/assumption/information is indicated, specific UE capability related to the specific processing/operation/control/assumption/information is reported, or the specific UE capability is supported, and
- application of the specific processing/operation/control/assumption/information is determined based on a specific condition.

The specific UE capability may indicate at least one of the following:
- supporting of the specific processing/operation/control/assumption/information,
- supporting of a specific feature/functionality/model,
- supporting of waveform transformation [for a specific feature/functionality/model],
- the [maximum] number of candidate sequences [supported/configurable] (in the second embodiment),
- the [maximum] length of candidate sequences [supported/configurable] (in the second embodiment),
- threshold [supported/configurable] (in the third embodiment),
- specific [complex] value [supported/configurable] (in the third embodiment), and
- metrics [supported/configurable] (in the seventh embodiment).

Note that the UE/BS may expect that the specific processing/operation/control/assumption/information is applied only when the UE reports supporting of the specific feature/functionality/model.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), capability per Feature Set (FS) or Feature Set Per Component-carrier (FSPC), or capability per functionality/model.

The specific UE capability may be capability applied over all the duplex schemes (commonly irrespective of duplex scheme) or capability per duplex scheme (for example, time division duplex (TDD) or frequency division duplex (FDD)).

The UE/BS may follow operation defined in an existing 3GPP resource, when the above conditions are not satisfied.

### (Supplementary Notes)

Regarding one embodiment of the present disclosure, the following supplementary notes of the invention will be given.

### {Supplementary Note 1}

A terminal including:
a control section that applies waveform transformation processing concerning signal constellation compensation when a waveform-transformation-related functionality or model is activated; and
a transmitting section that transmits an uplink signal based on complex-valued modulation symbols or complex-valued symbols that are shifted or scaled through the waveform transformation processing.

### {Supplementary Note 2}

The terminal according to supplementary note 1, wherein the waveform transformation processing includes deciding, based on the functionality or the model, a mapping between a block of bits indicating data to be transmitted by the uplink signal and the complex-valued modulation symbols.

### {Supplementary Note 3}

The terminal according to supplementary note 1 or 2, wherein the control section selects, based on a selective mapping, one of candidate sequences such that the uplink signal based on the complex-valued symbols achieves a minimum peak-to-average power ratio (PAPR), the complex-valued symbols being shifted or scaled based on the candidate sequences.

### {Supplementary Note 4}

The terminal according to any one of supplementary notes 1 to 3, wherein in the selective mapping, the control section changes an order between the complex-valued symbols and corresponding subcarriers.

### (Supplementary Notes)

Regarding one embodiment of the present disclosure, the following supplementary notes of the invention will be given.

### {Supplementary Note 1}

A terminal including:
a control section that applies waveform transformation processing when a waveform-transformation-related functionality or model is activated; and
a transmitting section that transmits an uplink signal based on complex values or time-continuous signals that are shifted, scaled, or clipped through the waveform transformation processing.

### {Supplementary Note 2}

The terminal according to supplementary note 1, wherein the control section applies the waveform-transformation processing to the time-continuous signal subsequent to inverse fast Fourier transform (IFFT) processing.

### {Supplementary Note 3}

The terminal according to supplementary note 1 or 2, wherein the control section applies the waveform-transformation processing to the complex value prior to inverse fast Fourier transform (IFFT) processing.

### {Supplementary Note 4}

The terminal according to any one of supplementary notes 1 to 3, wherein the control section transforms, through the functionality, the complex value prior to the IFFT processing to obtain the time-continuous signal.

### (Supplementary Notes)

Regarding one embodiment of the present disclosure, the following supplementary notes of the invention will be given.

### {Supplementary Note 1}

A terminal including:
a control section that applies waveform transformation processing concerning tone reservation when a waveform-transformation-related functionality or model is activated; and
a transmitting section that transmits, through the waveform transformation processing, an uplink signal including a peak-reduction tone.

### {Supplementary Note 2}

The terminal according to supplementary note 1, wherein the waveform transformation processing includes adding a specific signal to a time-continuous signal.

### {Supplementary Note 3}

The terminal according to supplementary note 1 or 2, wherein the waveform transformation processing includes deciding a complex value associated with a specific frequency resource, without depending on data to be transmitted by the uplink signal.

### {Supplementary Note 4}

The terminal according to any one of supplementary notes 1 to 3, wherein the waveform transformation processing includes adding a specific complex value to a complex value associated with a specific frequency resource.

### (Supplementary Notes)

Regarding one embodiment of the present disclosure, the following supplementary notes of the invention will be given.

### {Supplementary Note 1}

A terminal including:
a control section that does not simultaneously activate a plurality of waveform-transformation-related functionalities or models; and
a transmitting section that transmits an uplink signal by applying waveform transformation processing associated with activated one of the functionalities or the models.

### {Supplementary Note 2}

The terminal according to supplementary note 1, wherein the plurality of models are associated with a same functionality.

### {Supplementary Note 3}

The terminal according to supplementary note 1 or 2, wherein the plurality of functionalities are a plurality of specific functionalities that are notified.

### {Supplementary Note 4}

The terminal according to any one of supplementary notes 1 to 3, wherein the plurality of models are a plurality of models associated with a plurality of specific functionalities that are notified.

### (Supplementary Notes)

Regarding one embodiment of the present disclosure, the following supplementary notes of the invention will be given.

### {Supplementary Note 1}

A terminal including:
a control section that determines, for a given channel or reference signal, a waveform-transformation-related functionality or model to be applied; and
a transmitting/receiving section that performs transmission or reception processing of the channel or the reference signal, based on waveform-related processing associated with the functionality or the model.

### {Supplementary Note 2}

The terminal according to supplementary note 1, wherein the control section determines the functionality or the model, based on performance metrics.

### {Supplementary Note 3}

The terminal according to supplementary note 1 or 2, wherein the transmitting/receiving section reports the functionality or the model by using a parameter or element associated with an uplink control channel for a scheduling request for the channel or the reference signal.

### {Supplementary Note 4}

The terminal according to any one of supplementary notes 1 to 3, wherein the control section determines the functionality or the model, based on a notification from a network.

### (Radio Communication System)

Hereinafter, a structure of a radio communication system according to one embodiment of the present disclosure will be described. In this radio communication system, the radio communication methods according to the respective embodiments of the present disclosure described above may each be used alone or may be used in combination for communication.

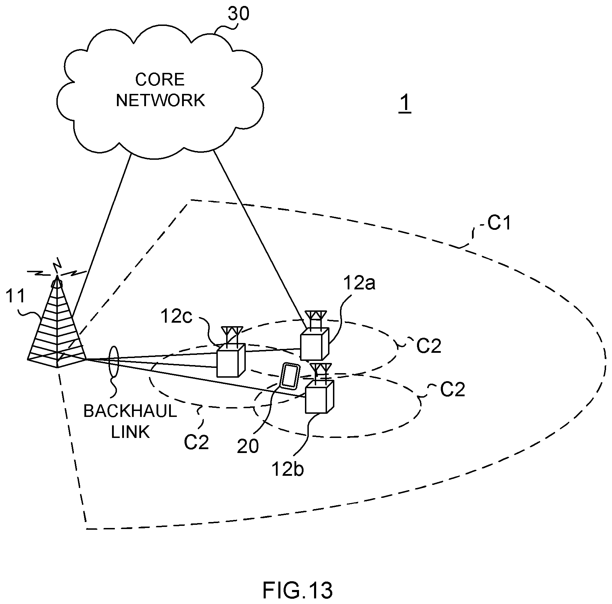

FIG. 13 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

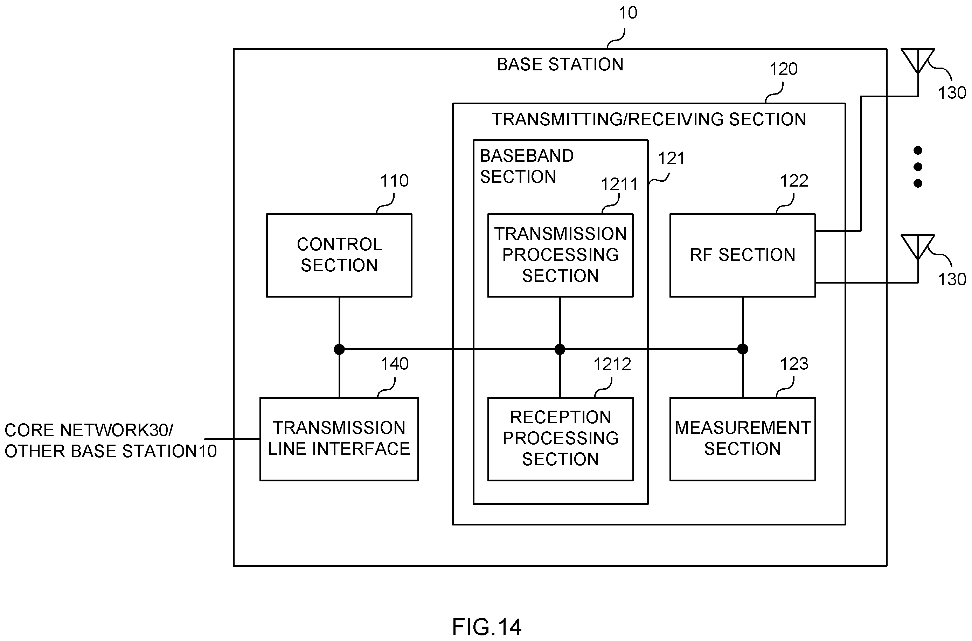

FIG. 14 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit information for activating a waveform-transformation-related functionality or model (refer to the seventh embodiment, for example).

The transmitting/receiving section 120 may receive an uplink signal transmitted, from the user terminal 20, based on complex-valued modulation symbols or complex-valued symbols that are shifted or scaled through waveform transformation processing concerning signal constellation compensation.

The transmitting/receiving section 120 may receive an uplink signal transmitted, from the user terminal 20, based on complex values or time-continuous signals that are shifted, scaled, or clipped through waveform transformation processing.

The transmitting/receiving section 120 may receive an uplink signal transmitted from the user terminal 20 through the waveform transformation processing, the uplink signal including a peak-reduction tone.

The control section 110 may assume that the user terminal 20 does not simultaneously activate a plurality of waveform-transformation-related functionalities or models. The transmitting/receiving section 120 may receive an uplink signal transmitted from the user terminal 20 by applying waveform transformation processing associated with activated one of the functionalities or the models for the user terminal 20.

The control section 110 may determine, for a given channel or reference signal, a waveform-transformation-related functionality or model to be applied in the user terminal 20. The transmitting/receiving section 120 may perform reception or transmission processing of the channel or the reference signal, based on waveform-related processing associated with the functionality or the model.

### (User Terminal)

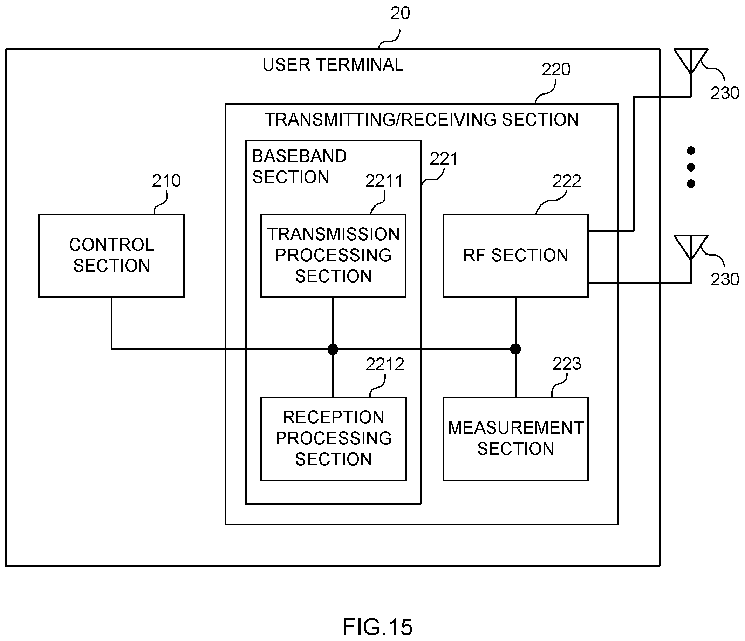

FIG. 15 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

Note that the control section 210 may apply waveform transformation processing concerning signal constellation compensation when a waveform-transformation-related functionality or model is activated. The transmitting/receiving section 220 may transmit an uplink signal based on complex-valued modulation symbols or complex-valued symbols that are shifted or scaled through the waveform transformation processing

The waveform transformation processing may include deciding, based on the functionality or the model, a mapping between a block of bits indicating data to be transmitted by the uplink signal and the complex-valued modulation symbols.

The control section 210 may select, based on a selective mapping, one of candidate sequences such that the uplink signal based on the complex-valued symbols achieves a minimum peak-to-average power ratio (PAPR), the complex-valued symbols being shifted or scaled based on the candidate sequences.

In the selective mapping, the control section 210 may change an order between the complex-valued symbols and corresponding subcarriers.

The control section 210 may apply waveform transformation processing when a waveform-transformation-related functionality or model is activated. The transmitting/receiving section 220 may transmit an uplink signal based on complex values or time-continuous signals that are shifted, scaled, or clipped through the waveform transformation processing.

The control section 210 may apply the waveform-transformation processing to the time-continuous signal subsequent to inverse fast Fourier transform (IFFT) processing.

The control section 210 may apply the waveform-transformation processing to the complex value prior to inverse fast Fourier transform (IFFT) processing.

The control section 210 may transform, through the functionality, the complex value prior to the IFFT processing to obtain the time-continuous signal.

The control section 210 may apply waveform transformation processing concerning tone reservation when a waveform-transformation-related functionality or model is activated. The transmitting/receiving section 220 may transmit an uplink signal including a peak-reduction tone, through the waveform transformation processing.

The waveform transformation processing may include adding a specific signal to a time-continuous signal.

The waveform transformation processing may include deciding a complex value associated with a specific frequency resource, without depending on data to be transmitted by the uplink signal.

The waveform transformation processing may include adding a specific complex value to a complex value associated with a specific frequency resource.

The control section 210 need not simultaneously activate a plurality of waveform-transformation-related functionalities or models. The transmitting/receiving section 220 may transmit an uplink signal by applying waveform transformation processing associated with activated one of the functionalities or the models.

The plurality of models may be associated with the same functionality.

The plurality of functionalities may be a plurality of specific functionalities that are notified.

The plurality of models may be a plurality of models associated with a plurality of specific functionalities that are notified.

The control section 210 may determine, for a given channel or reference signal, a waveform-transformation-related functionality or model to be applied. The transmitting/receiving section 220 may perform transmission or reception processing of the channel or the reference signal, based on waveform-related processing associated with the functionality or the model.

The control section 210 may determine the functionality or the model, based on performance metrics.

The transmitting/receiving section 220 may report the functionality or the model by using a parameter or element associated with an uplink control channel for a scheduling request for the channel or the reference signal.

The control section 210 may determine the functionality or the model, based on a notification from a network.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

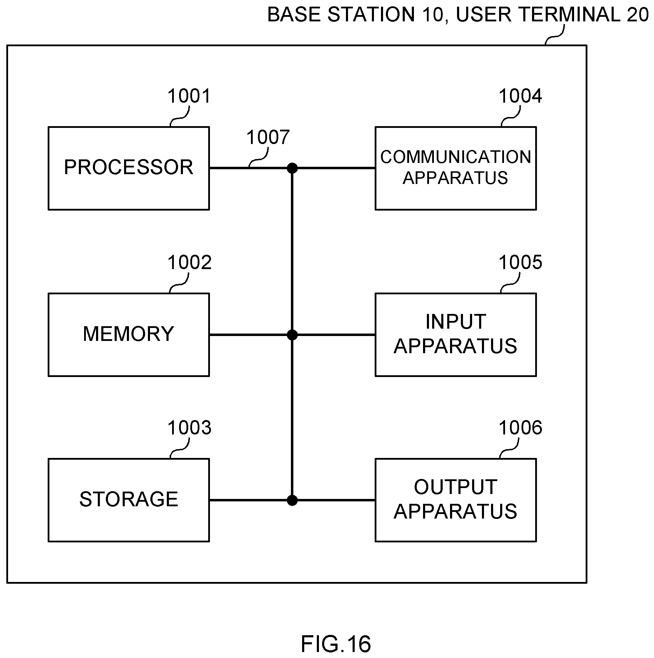

For example, a base station, a user terminal, and so on according to one embodiment of the present disclosure may function as a computer that executes the processes of the radio communication method of the present disclosure. FIG. 16 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

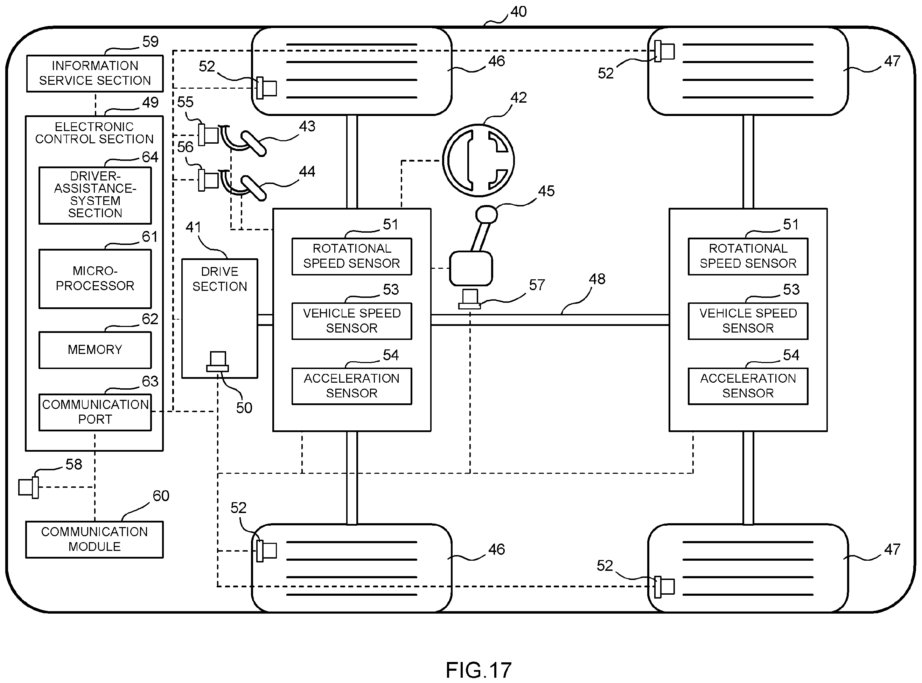

FIG. 17 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...", "..." (if "..." above is a to-infinitive, this "..." is a verb without "to"), or the like. "Does not expect ..." may be used interchangeably with "be not expected ...", "does not ..." (if "..." above is a to-infinitive, this "..." is a verb without "to"), or the like. Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a control section that does not simultaneously activate a plurality of waveform-transformation-related functionalities or models; and
a transmitting section that transmits an uplink signal by applying waveform transformation processing associated with activated one of the functionalities or the models.

2. The terminal according to claim 1, wherein
the plurality of models are associated with a same functionality.

3. The terminal according to claim 1, wherein
the plurality of functionalities are a plurality of specific functionalities that are notified.

4. The terminal according to claim 1, wherein
the plurality of models are a plurality of models associated with a plurality of specific functionalities that are notified.

5. A radio communication method for a terminal, the radio communication method comprising:
not simultaneously activating a plurality of waveform-transformation-related functionalities or models; and
transmitting an uplink signal by applying waveform transformation processing associated with activated one of the functionalities or the models.

6. A base station comprising:
a control section that assumes that a terminal does not simultaneously activate a plurality of waveform-transformation-related functionalities or models; and
a receiving section that receives an uplink signal transmitted from the terminal by applying waveform transformation processing associated with activated one of the functionalities or the models for the terminal.
